# EUROPEAN PATENT SPECIFICATION

(11) **EP 4 159 370 B1**
(45) Date of publication and mention of the grant of the patent: **29.10.2025**
(21) Application number: 22195039.7
(22) Date of filing: 12.09.2022
(51) Int. Cl.: B24B 27/033, B24B 23/00, B24B 23/02

(54) **TOOL AND REPAIR METHOD FOR REMOVING A THERMAL BARRIER COATING**
WERKZEUG UND REPARATURVERFAHREN ZUM ENTFERNEN EINER WÄRMEDÄMMSCHICHT
OUTIL ET PROCÉDÉ DE RÉPARATION POUR ENLEVER UN REVÊTEMENT DE BARRIÈRE THERMIQUE

(30) Priority: 30.09.2021 US 202117490339
(43) Date of publication of application: 05.04.2023
(73) Proprietor: GE Vernova Technology GmbH, 5400 Baden (CH)
(72) Inventor: CHAU, Rachel Taylor, Greenville, 29615 (US); MOGLE, Thomas Alan II, Greenville, 29615 (US); KOLVICK, Sandra Beverly, Greenville, 29615 (US); COOK, Paul Albert, Greenville, 29615 (US)
(74) Representative: Novagraaf Group

(56) References cited:
- WO-A2-2018/017142
- CN-A- 103 506 903
- CN-U- 202 097 616
- JP-U- S5 796 755
- KR-Y1- 200 471 783
- US-A1- 2019 061 091

## Description

### TECHNICAL FIELD

The disclosure relates generally to a turbomachine, and more particularly, to a tool and repair method for the removal of a thermal barrier coating (TBC) from a surface of a component of a turbomachine.

### BACKGROUND

A gas turbine system typically includes a compressor section, a combustor section, and at least one turbine section. The compressor section compresses air that is mixed with fuel, provided via a fuel nozzle assembly. The air/fuel mixture is delivered to the combustor section and then ignited generating hot combustion gases. The combustion gases are directed to the turbine section, which extracts energy from the combustion gases for producing useful work to power a load, such as an electrical generator, as well as for powering the compressor section.

The combustor section may include a combustion liner that defines a combustion region and a transition piece that connects an outlet end of the combustor section with an inlet end of the turbine section to deliver the hot combustion gases to the turbine section. In some cases, in an effort to decrease the number of individual components within the combustor system, the combustion liner and the transition piece of the combustor section may be combined into a unibody component.

Thermal barrier coatings (TBCs) are often used to protect and insulate various metal components (e.g., unibody component, turbine blades, etc.) in a gas turbine system that are exposed to high-temperature environments. TBCs also provide resistance to corrosion and oxidation. TBCs are generally deposited onto a metal substrate (or more typically onto a bond coat layer on the metal substrate for better adherence).

In some cases, during operation, components of a gas turbine system may expand due to high operational temperatures. Such expansion may cause a section of a component (e.g., a headend portion) to contact the TBC at an inlet end of the unibody component. This may cause TBC damage at the contact point and downstream of the contact point.

US 2019/0061091 A1 discloses a processing device for in-container operations and KR 200 471 783 Y1 discloses a portable polishing device, each of the devices having the features of the preamble of independent claim1.

CN 103 506 903 A discloses an inside pipe wall grinding-polishing device also having the features of the preamble of independent claim1. The device grinding-polishing device comprises adjustable wheels for centering the device inside the pipe to be processed.

CN 202 097 616 U discloses a grinding machine including a support, an abrasive grinding wheel rotatably driven by a motor and means for adjusting the position of the abrasive grinding wheel in the longitudinal and height directions relative to the support.

JP S57 96755 U discloses a grinding device for processing interior surfaces of steel pipes, comprising a tool holder suitable to set an axial position of the grinding tool and including a setscrew for setting a radial position of the grinding tool.

WO 2018/017142 A2 discloses a portable and transportable die cavity modifying machine comprising a base carrying a carriage adjustable along one axis, e.g., a generally horizontal axis, and a machining head adjustable along another axis, e.g., a generally vertical axis, for modifying a die cavity of a stamping die. In some embodiments, a tool holder includes clamping blocks with a thumbscrew for causing the clamping blocks to frictionally engage opposite sides of a housing of a tool to frictionally retain the tool in place. The axial position of the tool may be adjusted using the thumbscrew and the clamping blocks.

### BRIEF DESCRIPTION

According to the invention a tool for removing a coating from the interior surface of a component is provided as defined in claim 1.

In an embodiment, the tool further includes at least one biasing member for mounting the collet assembly to the base, wherein the at least biasing member is configured to spring load the collet assembly toward the base.

In an embodiment, the collet assembly further includes a depth limiter for setting a maximum cutting depth of the grinding attachment into the coating on the interior surface of the component.

The axial position of the initial cut defines a maximum axial distance into the component.

In an application, the component includes a combustion component of a gas turbine system.

The combustion component may include a unibody component or a liner.

In an embodiment, the wheel assembly coupled to the tool holder is configured to guide the tool holder along a flange extending about an interior perimeter of the component.

In an embodiment, the wheel assembly includes at least one first wheel rotatably mounted to the tool holder for engaging the interior surface of the component, at least one second wheel rotatably mounted to the tool holder for engaging an outside edge of the flange, and at least one pair of third wheels rotatably mounted to the tool holder for engaging opposing sides of the flange.

In an application , the coating comprises a thermal barrier coating (TBC).

A further aspect of the invention includes a method for removing a thermal barrier coating (TBC) from an interior surface of a combustion component of a gas turbine system using the tool as described above, the method including: positioning the tool within an interior of the combustion component; using the first handwheel, setting an initial axial position of the grinding attachment of the rotary device within the interior of the combustion component; using the second handwheel, setting a radial position of the grinding attachment of the rotary device within the interior of the combustion component to form an initial cut into the TBC; and, using the first handwheel and the second handwheel, adjusting the axial position and the radial position of the grinding attachment of the rotary device within the interior of the combustion component to form additional cuts into the TBC.

In an embodiment, the method also includes, after forming the initial cut and the additional cuts into the TBC, attaching a polishing attachments to the rotary device, and removing additional TBC using the polishing attachment.

In an embodiment, the method also includes displacing the tool about the interior perimeter of the combustion component when forming the initial cut and the additional cuts.

The initial cut may define a maximum axial distance from an edge of the TBC, wherein the additional cuts are formed between the initial cut and the edge of the TBC.

In an embodiment, the method also includes tapering an edge of the TBC.

In an embodiment, the combustion component includes an internal feature that extends about the interior perimeter of the combustion component, and the wheel assembly is configured to guide the tool holder along the internal feature of the combustion component.

In an embodiment, the method also includes providing a constant downward pressure of the grinding attachment against the TBC.

In an embodiment, the method is performed at an operational site of the gas turbine system.

In an application, the combustion component includes a unibody component or a liner.

The details of one or more implementations are set forth in the accompanying drawings and the description below. Other features, aspects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure in which:
FIG. 1 shows a schematic view of an illustrative turbomachine in the form of a gas turbine system;
FIG. 2 is a cross-sectional view of a combustor section of a gas turbine system;
FIG. 3 depicts a tool for removing a thermal barrier coating (TBC) from a surface of a component (e.g., unibody component) of a gas turbine system according to embodiments of the disclosure;
FIG. 4 depicts an operational displacement of the tool of FIG. 3 according to embodiments of the disclosure, when viewed in the direction indicated by arrow A in FIG. 2.,
FIG. 5 is a perspective view of the tool of FIG. 3 according to embodiments of the disclosure, with the tool positioned against an interior surface of a unibody component;
FIG. 6 is a perspective view of the tool of FIG. 3 according to embodiments of the disclosure;
FIG. 7 is a flow diagram of an illustrative process for selectively removing TBC from an interior surface of a unibody component of a gas turbine system according to embodiments of the disclosure;
FIG. 8 depicts a positioning of the tool of FIG. 3 within a unibody component according to embodiments of the disclosure;
FIG. 9 depicts an axial positioning of a grinding/polishing attachment of the tool depicted in FIG. 8 according to embodiments of the disclosure;
FIG. 10 depicts a radial positioning of the grinding/polishing attachment of the tool of FIG. 9, and an initial cut made in the TBC by the grinding/polishing attachment of the tool, according to embodiments of the disclosure;
FIG. 11 depicts the tool of FIG. 10 after several additional cuts have been made in the TBC by the grinding/polishing attachment of the tool according to embodiments of the disclosure;
FIG. 12 depicts the tool of FIG. 11 when configured for polishing according to embodiments of the disclosure; and
FIG. 13 depicts the unibody component of FIG. 12 after removal of the TBC according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current disclosure, it will become necessary to select certain terminology when referring to and describing relevant machine components within a turbomachine and/or a turbomachine blade. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbine engine or, for example, the flow of air through the combustor or coolant through one of the turbine's component systems. The term "downstream" corresponds to the direction of flow of the fluid, and the term "upstream" refers to the direction opposite to the flow (i.e., the direction from which the flow originates). The terms "forward" and "aft," without any further specificity, refer to directions, with "forward" referring to the front or compressor end of the engine, and "aft" referring to the rearward section of the turbomachine.

It is often required to describe parts that are disposed at differing radial positions with regard to a center axis. The term "radial" refers to movement or position perpendicular to an axis. For example, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to the axis of rotation of the turbine system, or in a chordal direction between leading and trailing edges of an airfoil. Finally, the term "circumferential" refers to movement or position around an axis. It will be appreciated that such terms may be applied in relation to the center axis of the turbine.

In addition, several descriptive terms may be used regularly herein, as described below. The terms "first", "second", and "third" may be used interchangeably to distinguish one component from another and are not intended to signify location or importance of the individual components.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur or that the subsequently describe component or element may or may not be present, and that the description includes instances where the event occurs or the component is present and instances where it does not or is not present.

Where an element or layer is referred to as being "on," "engaged to," "connected to" or "coupled to" another element or layer, it may be directly on, engaged to, connected to, or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

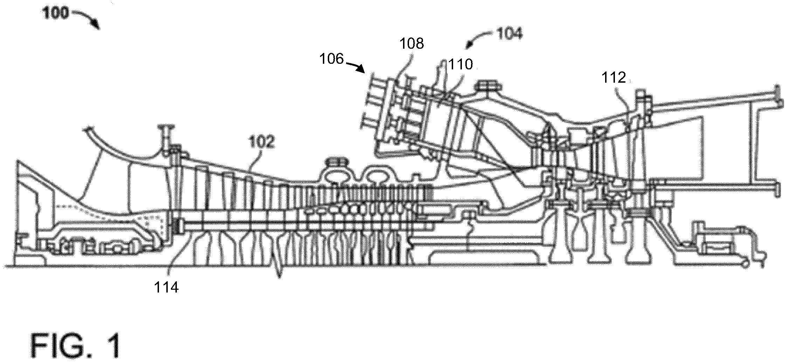

FIG. 1 depicts a schematic illustration of an illustrative turbomachine 100 in the form of a combustion or gas turbine system. As shown, the turbomachine 100 includes a compressor section 102 and a combustor section 104. The combustor section 104 includes a headend portion 106 including a fuel nozzle assembly 108, and a combustion region 110. The turbomachine 100 also includes a turbine section 112 and a common compressor/turbine shaft 114 (sometimes referred to as rotor 114). In one embodiment, the combustion turbine system is a 7HA or 9HA engine, commercially available from General Electric Company, Greenville, S.C.

The present disclosure is not limited to any one particular combustion or gas turbine system and may be implanted in connection with other engines including, for example, various HA, F, B, LM, GT, TM and E-class engine models of General Electric Company and engine models of other companies. Further, the teachings of the disclosure are not necessarily applicable to only a combustion or gas turbine system and may be applied to other types of turbomachines, e.g., steam turbines, jet engines, compressors, etc.

In operation, air flows through the compressor section 102 and compressed air is supplied to the combustor section 104. Specifically, the compressed air is supplied to the fuel nozzle assembly 108, which is in flow communication with the combustion region 110. The fuel nozzle assembly 108 is also in flow communication with a fuel source (not shown in FIG. 1) and channels fuel and air to the combustion region 110. The combustor section 104 ignites and combusts the fuel/air mixture.

The combustor section 104 is in flow communication with the turbine section 112. The hot combustion gases produced by the combustor section 104 are directed into the turbine section 112 and are converted mechanical rotational energy. The turbine section 112 is rotatably coupled to and drives rotor 114. The compressor section 102 also is rotatably coupled to rotor 114.

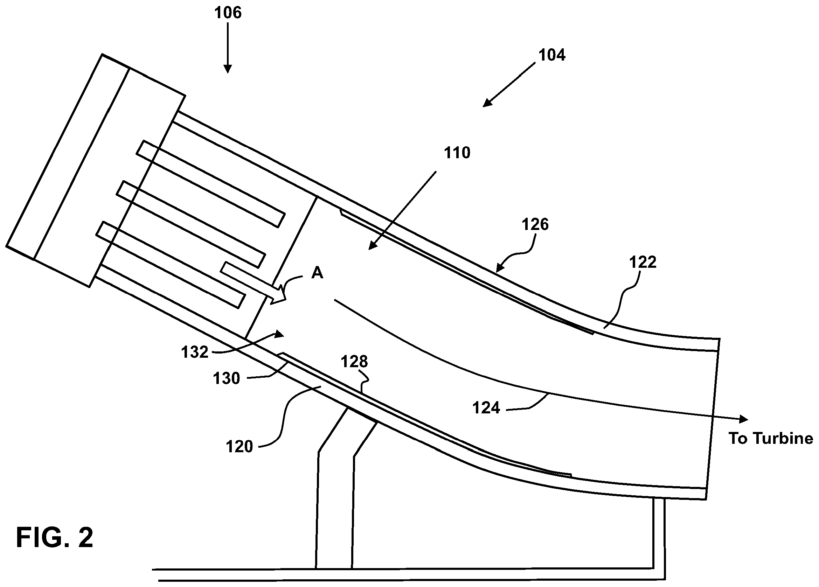

FIG. 2 depicts a simplified cross-sectional illustration of the combustor section 104. As shown, the combustor section 104 may include a combustion region 110 including a combustion liner 120 and a transition piece 122 for delivering hot combustion gases 124 produced by the combustor section 104 to the turbine section 112. According to embodiments, the combustion liner 120 and the transition piece 122 of the combustor section 104 may be combined into a single combustion component 126, including but not limited to a "unibody" component 126 from General Electric Company. A thermal barrier coating (TBC) 128 may be formed, for example, on an interior surface 130 of the unibody component 126.

In some cases, during operation, components of the gas turbine system 100 may expand due to high operational temperatures. For example, a section of the headend portion 106 may expand and contact the TBC 128 on the interior surface 130 of an inlet end 132 (e.g., forward or upstream end) of the unibody component 126. This may cause damage to the TBC 128 at the contact point and downstream of the contact point. To prevent such damage to the TBC 128, it may be necessary to remove a portion of the TBC 128 at or adjacent the contact point. In the past, such removal of the TBC 128 from the interior surface 130 of the inlet end 132 of the unibody component 126 would require a servicing of the unibody component 126 at a repair or manufacturing site, which could often take several months.

A tool and repair method that allows the removal (e.g., *in situ*) of a layer of material (e.g., TBC) from a surface (e.g., interior surface) of a component of a gas turbine system (e.g., a unibody component, liner, etc.) according to embodiments will now be described. Although described herein for use with a unibody component of a gas turbine system, it should be clear that the tool and repair method may be used to remove TBC or other material layer from surface(s) of other components of a gas turbine system or other systems/machines.

The tool is a custom fixture that can attach to a portion of a unibody component such that it can 'ride' around the perimeter of the unibody component to carefully and consistently machine or grind down the TBC on an interior surface to a desired thickness. The repair method includes use of a grinding wheel (e.g., a diamond grinding wheel) to first score an initial cut into the TBC (e.g., at a maximum axial distance from the edge of the TBC) to protect the TBC that will remain on the unibody component after the removal process. After the initial cut, multiple additional cuts can be formed in the TBC to remove the bulk of the TBC. The grinding wheel is then replaced with a polishing wheel (e.g., diamond flapper wheel) to remove the remaining TBC and to polish and smooth the base metal and bond coat surface.

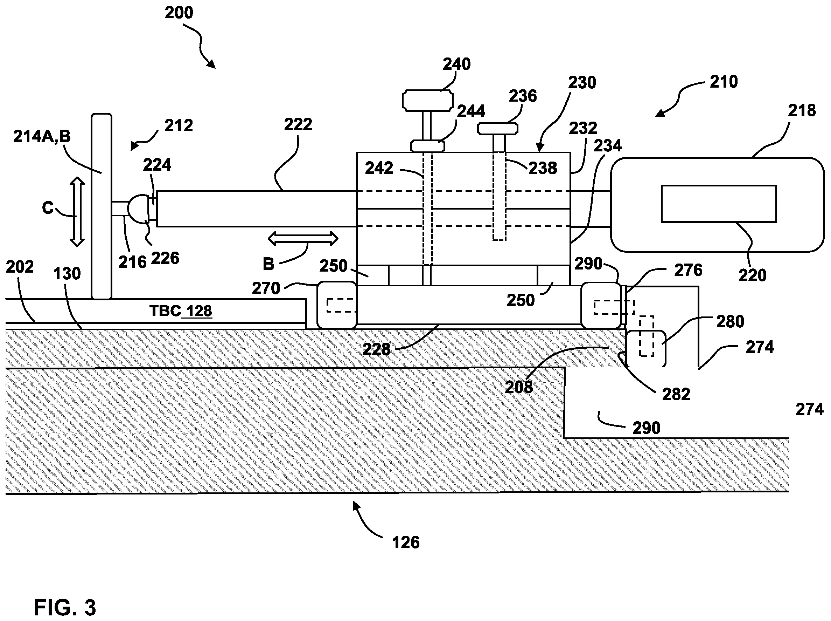

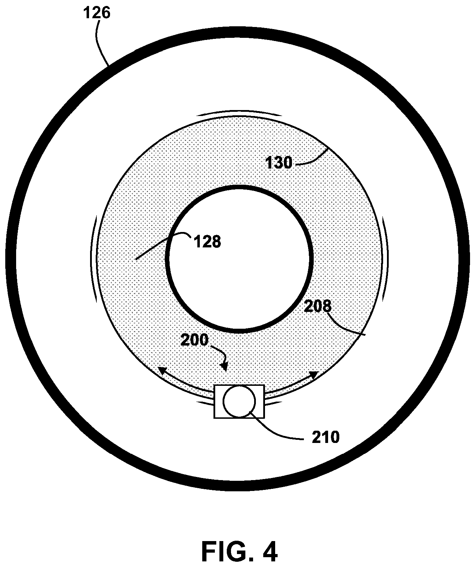

A tool 200 for removing a portion of a layer of TBC 128 from an interior surface 130 of a unibody component 126 according to embodiments is depicted in FIGS. 3, 5 and 6. FIG. 4 depicts an operational displacement of the tool 200 when viewed in the direction indicated by arrow A (i.e., downstream) in FIG. 2.

According to embodiments, the tool 200 is configured to ride along an interior perimeter of the unibody component 126. In some cases, as depicted in FIGS. 3 and 4, the unibody component 126 may include an interior flange 208 that extends about an interior perimeter of the unibody component 126. In such a case, the tool 200 may be configured to ride along the flange 208 about the interior perimeter of the unibody component 126. If no flange 208 is present, the tool 200 may be modified accordingly to ride about the interior perimeter of the unibody component 126.

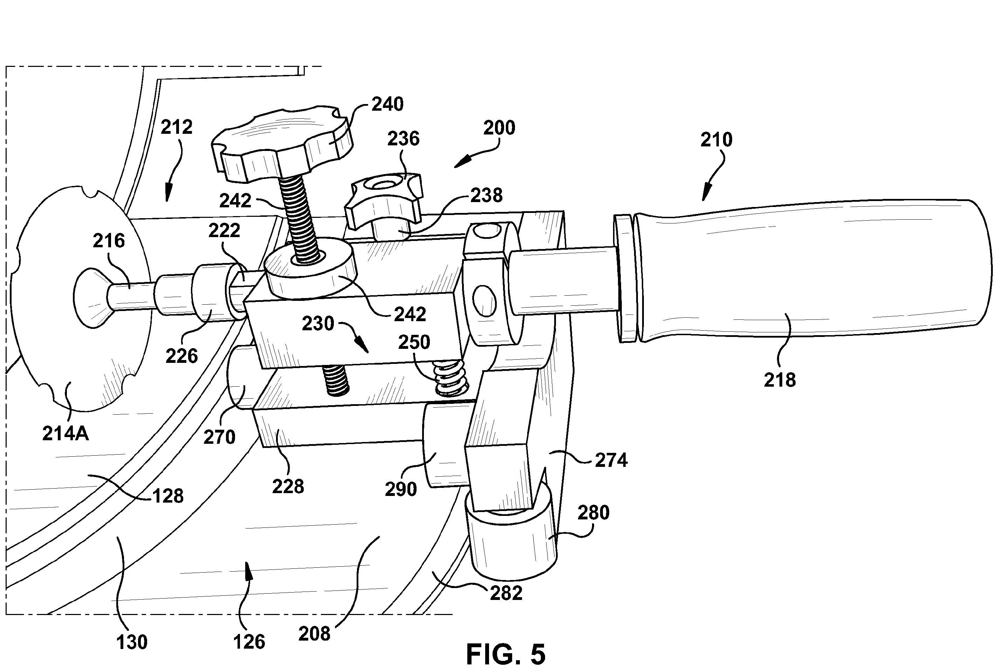

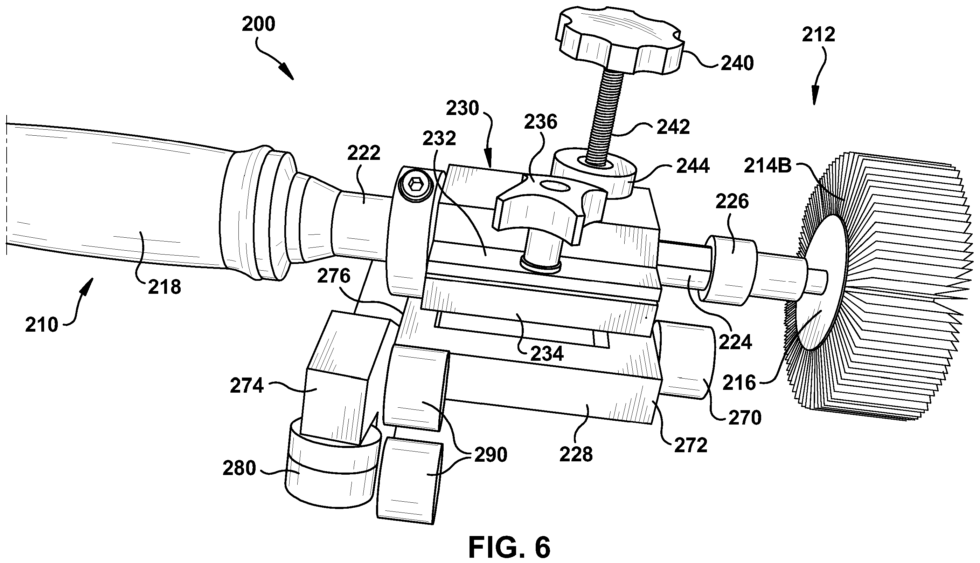

Referring now to FIGS. 3, 5, and 6, the tool 200 includes a rotary device 210 that includes a rotatable grinding/polishing attachment 212. As shown, the grinding/polishing attachment 212 may include a grinding wheel 214A (e.g., a diamond grinding wheel, FIG. 5) or a polishing wheel 214B (e.g., a diamond flapper wheel, FIG. 6) coupled to a shaft 216. Other types of grinding/polishing wheels and/or rotary device attachments capable of removing TBC 128 from a surface may also be employed. Also, according to embodiments, the rotary device 210 may comprise a pneumatic die grinder or other device capable of rotating the grinding/polishing attachment 212.

The rotary device 210 may include a handle 218 that houses a motor 220 (e.g., pneumatic motor), a housing 222, and a rotatable spindle 224 driven by the motor 220. The spindle 224 extends through and out of the housing 222 and includes a collet 226 for releasably coupling the grinding/polishing attachment 212 to the spindle 224.

The tool 200 includes a tool holder including a base 228 and a collet assembly 230 coupled to the base 228. The collet assembly 230 includes an upper section 232, a lower section 234, and a handwheel 236 for selectively displacing the upper section 232 of the collet assembly 230 towards or away from the lower section 234 to secure or release the rotary device 210. The handwheel 236 may be coupled to a threaded shaft 238 that extends through the upper section 232 of the collet assembly 230 to the lower section 234.

The collet assembly 230 may be used to set an axial position of the rotary device 210 (e.g., into and out of the unibody component 126 as depicted by arrow B, FIG. 3). This allows an operator to selectively set the axial position of the grinding/polishing attachment 212 over a portion of the TBC 128 that is to be removed. In some cases, a portion of a bond coat layer 202 formed between the TBC 128 and the interior surface 130 of the unibody component 126 may also be removed using the grinding/polishing attachment 212 of the rotary device 210.

In operation, the axial position of the rotary device 210 and the grinding/polishing attachment 212 of the tool 200 may be adjusted by rotating the handwheel 236 and attached threaded shaft 238 in a first direction to displace the upper section 232 of the collet assembly 230 away from the lower section 234, thereby releasing the rotary device 210. The rotary device 210 and the grinding/polishing attachment 212 may then be repositioned to a desired axial position on the tool 200. Thereafter, the handwheel 236 and attached threaded shaft 238 may be rotated in a second, opposite direction to move the upper section 232 of the collet assembly 230 toward the lower section 234, thereby retightening the collet assembly 230 about the rotary device 210.

According to the invention, a handwheel 240 and attached threaded shaft 242 may also be used to set the radial position of the rotary device 210 and attached grinding/polishing attachment 212 of the tool 100 (e.g., toward and away from the interior surface 130 of the unibody component 126 as depicted by arrow C, FIG. 3). As depicted in FIG. 3, the threaded shaft 242 may extend through the upper and lower sections 232, 234 of the collet assembly 230 to a surface of the base 228. A depth limiter 244 (e.g., a locking knob) may be provided to limit the amount of radial displacement of the rotary device 210 and grinding/polishing attachment 212 toward the interior surface 130 of the unibody component 126, for example to prevent the grinding/polishing attachment 212 of the rotary device 210 from damaging the metal surface (e.g., interior surface 130) of the unibody component 126.

In operation, the radial position of the rotary device 210 and the grinding/polishing attachment 212 of the tool 200 may be adjusted by rotating the handwheel 240 and attached threaded shaft 242 in a first direction to move the collet assembly 230 toward the base 228. Similarly, the handwheel 240 and attached threaded shaft 242 may be rotated in a second, opposite direction to move the collet assembly 230 away from the base 228. To this extent, the cutting depth of the grinding/polishing attachment 212 of the rotary device 210 may be adjusted as needed.

According to embodiments, as can be seen in FIGS. 3 and 5, the tool 200 may include at least one biasing member 250 for coupling the collet assembly 230 to the base 228 and for spring loading the collet assembly 230 (and attached rotary device 210) downward toward the base 228. The biasing member(s) 250 may be attached between the lower section 234 of the collet assembly 230 and the base 228 and may be configured to provide a controlled (e.g., constant) downward pressure on the collet assembly 230, rotary device 210, and grinding/polishing attachment 212.

The tool 200 may include a wheel assembly including at least one set of wheels for enabling the tool 200 to travel (e.g., ride) along the profile of the unibody component 126 - even if the unibody component 126 is out of round. For example, as depicted in FIGS. 3, 5, and 6, the tool 200 may include a first set of wheels 270 that are rotatably mounted to, and extend forward of, the base 228 of the tool 200. The first set of wheels 270 may include at least one wheel 270 that is configured to roll on the interior surface 130 of the unibody component 126. A single wheel 270 mounted to a center of a forward edge 272 of the base 228 is depicted in FIGS. 3, 5 and 6, although more than one wheel 270 may be provided.

A back plate 274 may be coupled to a rear 276 of the base 228 of the tool 200. According to embodiments, a second set of wheels 280 may be rotatably mounted to the back plate 274 of the base 228. The second set of wheels 280 may include at least one wheel 280 that is configured to roll against an outside edge 282 of the flange 208 of the unibody component 126. As best seen in FIGS. 5 and 6, a pair of wheels 280 may be rotatably mounted on opposing sides of the back plate 274 of the base 228, although one wheel 280 or more than two wheels 280 may be provided.

A third set of wheels 290 may also be rotatably mounted to the back plate 274 of the base 228. The third set of wheels 290 may include at least one pair of offset wheels 290 that are configured to roll against opposing top and bottom sides of the flange 208 of the unibody component 126. As best seen in FIGS. 5 and 6, two pairs of wheels 290 may be provided, although one pair of wheels 290 or more than two pairs of wheels 290 may be employed.

If the flange 208 is not present, the second set of wheels 280 may not be required. Further, in such a case, one or more of the wheels 290 mounted to the back plate 274 of the base 228 may be provided to roll against the interior surface 130 of the unibody component 126.

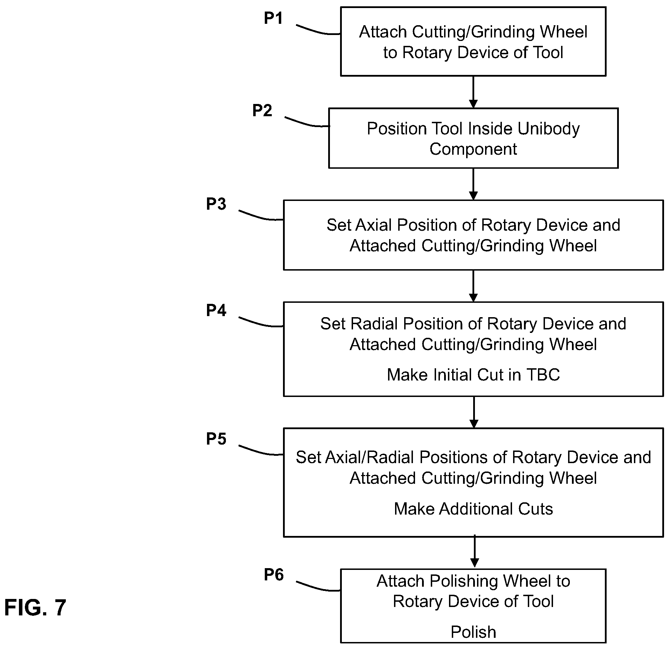

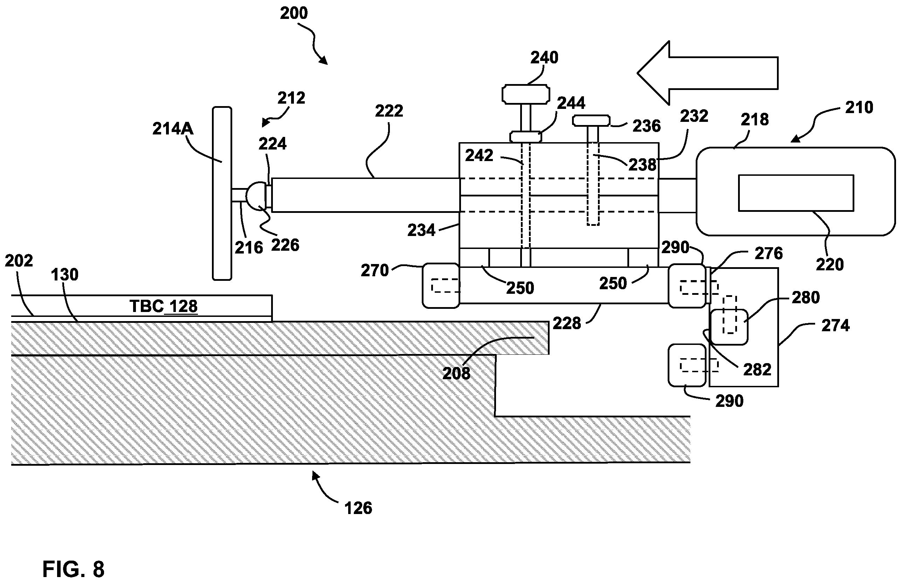

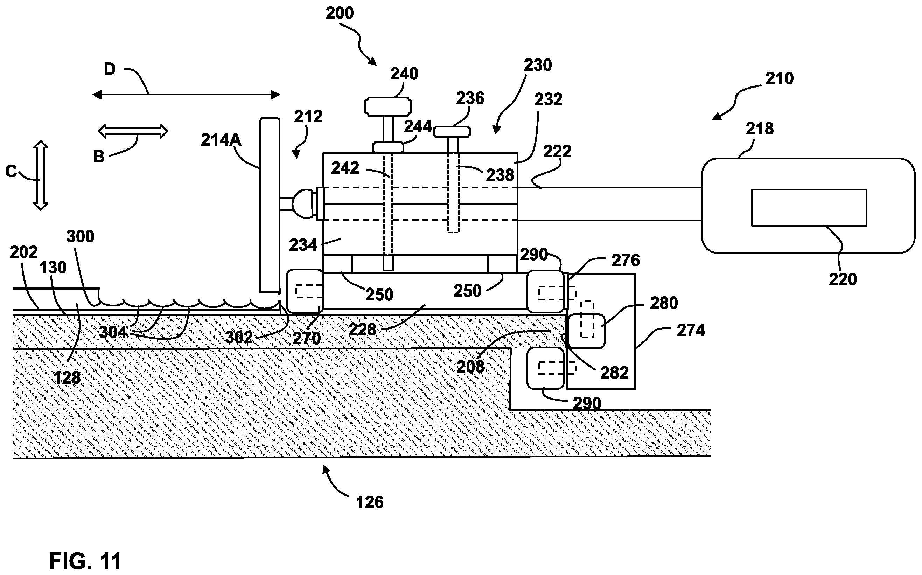

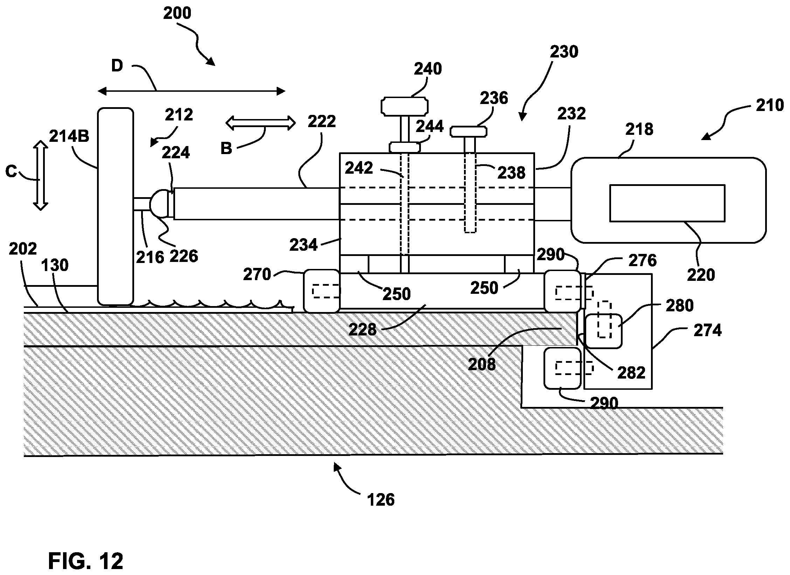

A flow diagram of an illustrative process for selectively removing TBC 128 from the interior surface 130 of a unibody component 126 according to embodiments is depicted in FIG. 7. Corresponding views of the tool 200 in operation are depicted in FIGS. 8-12.

At process P1, a grinding wheel 214A is attached to the rotary device 210 of the tool 200. At process P2, the tool 200 is moved into position at the inlet end 132 (FIG. 2) of the unibody component 126 (FIG. 8).

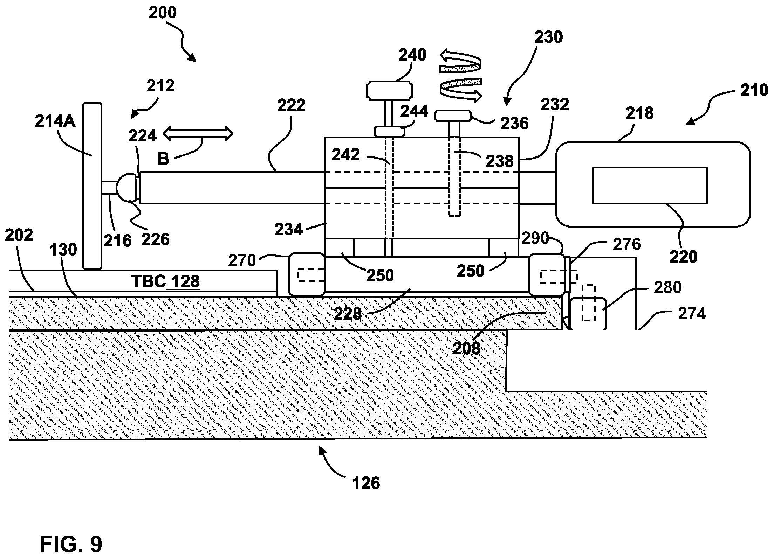

Assuming the unibody component 126 includes the interior flange 208, each wheel 270 is positioned on the interior surface 130 of the unibody component 126, each wheel 280 is positioned against the outside edge 282 of the flange 208, and each pair of wheels 290 is positioned against opposing top and bottom sides of the flange 208. Thereafter, in process P3, as depicted in FIG. 9, the axial position of the rotary device 210 and attached grinding wheel 214A of the tool 200 may be modified/set by loosening the handwheel 236, displacing the rotary device 210 and attached grinding wheel 214A to a desired position within the collet assembly 230, and retightening the handwheel 236.

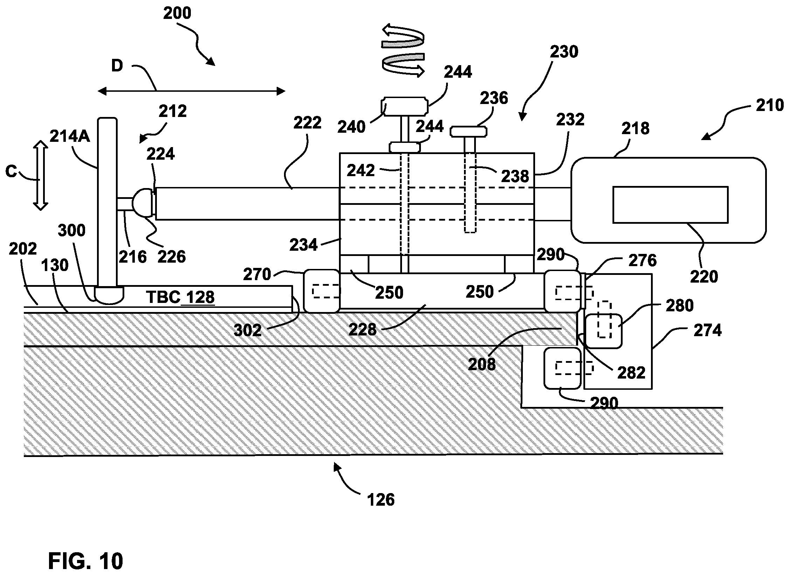

As depicted in FIG. 10, at process P4, an initial cut 300 is scored in the TBC 128 by the grinding wheel 214A attached to the rotary device 210 (e.g., at a maximum axial distance D from the edge 302 of the TBC 128) to delineate the portion of the TBC 128 that is to be removed. The handwheel 240 and attached threaded shaft 242 may be manipulated as necessary to displace the grinding wheel 214A against and into the TBC 128 to a desired cutting depth during the cutting process.

At process P5, after the initial cut 300, the axial and radial positions of the rotary device 210 and attached grinding wheel 214A may be selectively adjusted as described above to create multiple additional cuts 304 in the TBC 128 to remove the bulk of the TBC 128 from the interior surface 130 of the unibody component 126 (e.g., from the edge 302 of the TBC 128 to the maximum axial distance D defined by the initial cut 300). If necessary, the cuts 300, 304 may extend into the bond coat 202 to remove portions of the bond coat 202.

At process P6, the grinding wheel 214A attached to the rotary device 210 may be replaced with a polishing wheel 214B (e.g., diamond flapper wheel) to remove any remaining TBC 128 and to polish and smooth the base metal (e.g., interior surface 130 of the unibody 126) and, if necessary, the surface of the bond coat 202. The axial and radial positions of the rotary device 210 and attached polishing wheel 214B may be selectively adjusted as described above.

As previously described with regard to FIG. 4, the tool 200 may include at least one set of wheels 270, 280, 290 for enabling the tool 200 to easily travel (e.g., ride) along the profile of the unibody component 126. To this extent, an operator of the tool 200 can guide the tool 200 about the unibody component 126 while performing the grinding/polishing operations. This may include, for example, forming the initial cut 300 by displacing the tool 200 about the entire interior perimeter of the unibody component 126. Thereafter, the operator may focus on separate arcuate sections of the TBC 128 when making the additional cuts 304 and during polishing. Alternatively, the operator may displace the tool 200 about the entire interior perimeter of the unibody component 126 while making the additional cuts 304. Other techniques are, of course, possible.

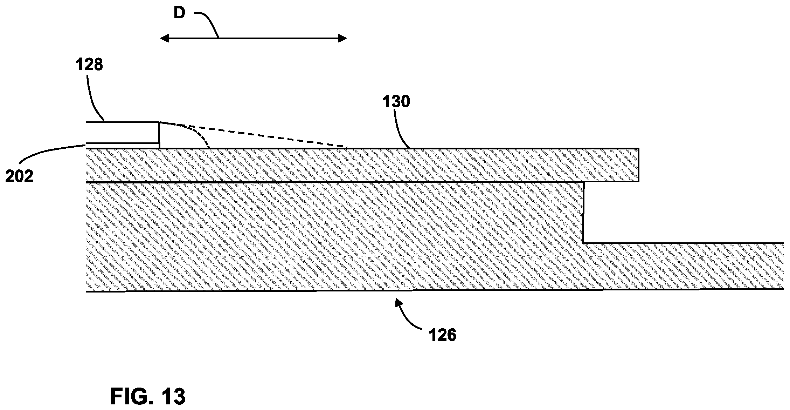

FIG. 13 depicts the interior surface 130 of the unibody component 126 after the complete removal of the TBC 128 (and bond coat 202) for a distance D from the original edge 302 (FIG. 10) of the TBC 128. In some cases, however, it may not be necessary to remove all of the TBC 128 in this area. Instead, the TBC 128 may be removed in a tapered manner as shown in phantom in FIG. 13 by adjusting the radial position of the rotary device 210 and the grinding wheel 214A of the tool 200 to provide cuts 300, 304 of varying depths. Two possible profiles are depicted in FIG. 13. Other profiles are also possible.

Embodiments of the disclosure can drastically reduce the amount of downtime required to remove TBC from a component (e.g., a unibody component) of a turbomachine. In the past, the removal of the TBC from the interior surface of a unibody component would require the component to be shipped to a repair or manufacturing site where the TBC would be removed, which could often take several months. Advantageously, the tool 200 according to embodiments may be used *in situ* during on-site assembly of the turbomachine, reducing the downtime from several months to a few weeks or even days.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the appended claims. The embodiment was chosen and described in order to best explain the principles of the disclosure and the practical application and to enable others of ordinary skill in the art to understand the disclosure for various embodiments with various modifications as are suited to the particular use contemplated.

## Claims

1. A tool (200) for removing a coating from an interior surface (130) of a component (126), comprising:
a rotary device (210);
a grinding attachment (214A) attached to the rotary device (210);
a tool holder configured to:
set an axial position of the grinding attachment (214A) coupled to the rotary device (210) over the coating (128) on the interior surface (130) of the component (126); and
set a radial position of the grinding attachment (214A) coupled to the rotary device (210), the radial position defining a cutting depth of the grinding attachment (214A) into the coating (128) on the interior surface (130) of the component (126);
and
a wheel assembly (270, 280, 290) coupled to the tool holder for guiding the tool holder about an interior perimeter of the component (126);
**characterized in that**
the tool holder comprises a base (228) and a collet assembly (230) coupled to the base (228) for securing the rotary device (210);
wherein the collet assembly (230) comprises:
an upper section (232);
a lower section (234);
a first handwheel (236) coupled to a threaded shaft (238) for selectively displacing the upper section (232) of the collet assembly (230) toward or away from the lower section (234) of the collet assembly (230) to facilitate setting the axial position of the grinding attachment (214A); and
a second handwheel (240) coupled to a threaded shaft (242) for selectively displacing the collet assembly (230) toward or away from the base (228) to facilitate setting the radial position of the grinding attachment (214A) to set the cutting depth of the grinding attachment (214A) into the coating (128) on the interior surface (130) of the component (126), wherein the threaded shaft (242) extends through the collet assembly (230) to the base (228).

2. The tool (200) according to claim 1, further comprising at least one biasing member (250) for mounting the collet assembly (230) to the base (228), wherein the at least biasing member (250) is configured to spring load the collet assembly (230) toward the base (228).

3. The tool (200) according to claim 1, wherein the collet assembly (230) further comprises:
a depth limiter (244) for setting a maximum cutting depth of the grinding attachment (214A) into the coating (128) on the interior surface (130) of the component (126).

4. The tool (200) according to claim 1, wherein the wheel assembly (270, 280, 290) coupled to the tool holder is configured to guide the tool holder along a flange (208) extending about an interior perimeter of the component (126).

5. The tool (200) according to claim 4, wherein the wheel assembly (270, 280, 290) further comprises:
at least one first wheel (270) rotatably mounted to the tool holder for engaging the interior surface (130) of the component (126);
at least one second wheel (280) rotatably mounted to the tool holder for engaging an outside edge (282) of the flange (208); and
at least one pair of third wheels (290) rotatably mounted to the tool holder for engaging opposing sides of the flange (208).

6. A method for removing a thermal barrier coating (TBC) (128) from an interior surface (130) of a combustion component (126) of a gas turbine system (100) using the tool (200) of anyone of the preceding claims, the method comprising:
positioning the tool (200) within an interior of the combustion component (126);
using the first handwheel (236), setting an initial axial position of the grinding attachment (214A) of the rotary device (210) within the interior of the combustion component (126);
using the second handwheel (240), setting a radial position of the grinding attachment (214A) of the rotary device (210) within the interior of the combustion component (126) to form an initial cut (300) into the TBC (128); and
using the first handwheel (236) and the second handwheel (240), adjusting the axial position and the radial position of the grinding attachment (214A) of the rotary device (210) within the interior of the combustion component (126) to form additional cuts (304) into the TBC (128).

7. The method according to claim 6, further comprising, after forming the initial cut (300) and the additional cuts (304) into the TBC (128):
attaching a polishing attachment (214B) to the rotary device (210); and
removing additional TBC (128) using the polishing attachment (214B).

8. The method according to claim 6, further comprising:
displacing the tool (200) about the interior perimeter of the combustion component (126) when forming the initial cut (300) and the additional cuts (304).

9. The method according to claim 6, wherein the initial cut (300) defines a maximum axial distance from an edge (302) of the TBC (128), wherein the additional cuts (304) are formed between the initial cut (300) and the edge (302) of the TBC (128).

## Patentansprüche

1. Werkzeug (200) zum Entfernen einer Beschichtung von einer Innenoberfläche (130) einer Komponente (126), umfassend:
eine Drehvorrichtung (210);
einen Schleifaufsatz (214A), der an der Drehvorrichtung (210) angebracht ist;
einen Werkzeughalter, der konfiguriert ist zum:
Einstellen einer axialen Position des Schleifaufsatzes (214A), der über der Beschichtung (128) auf der Innenoberfläche (130) der Komponente (126) mit der Drehvorrichtung (210) gekoppelt ist; und
Einstellen einer radialen Position des Schleifaufsatzes (214A), der mit der Drehvorrichtung (210) gekoppelt ist, wobei die radiale Position eine Schnitttiefe des Schleifaufsatzes (214A) in die Beschichtung (128) auf der Innenoberfläche (130) der Komponente (126) definiert; und
eine Radanordnung (270, 280, 290), die mit dem Werkzeughalter zum Führen des Werkzeughalters um einen Innenumfang der Komponente (126) gekoppelt ist;
**dadurch gekennzeichnet, dass**
der Werkzeughalter eine Basis (228) und eine Spannzangenanordnung (230), die mit der Basis (228) zum Befestigen die Drehvorrichtung (210) gekoppelt ist, umfasst;
wobei die Spannzangenanordnung (230) umfasst:
einen oberen Bereich (232);
einen unteren Bereich (234);
ein erstes Handrad (236), das mit einer Gewindewelle (238) zum wahlweisen Verschieben des oberen Bereichs (232) der Spannzangenanordnung (230) in Richtung des unteren Bereichs (234) der Spannzangenanordnung (230) oder von diesem weg gekoppelt ist, um das Einstellen der axialen Position des Schleifaufsatzes (214A) zu ermöglichen; und
ein zweites Handrad (240), das mit einer Gewindewelle (242) zum wahlweisen Verschieben der Spannzangenanordnung (230) in Richtung der Basis (228) oder von dieser weg gekoppelt ist, um das Einstellen der radialen Position des Schleifaufsatzes (214A) zu ermöglichen, um die Schnitttiefe des Schleifaufsatzes (214A) in die Beschichtung (128) auf der Innenoberfläche (130) der Komponente (126) einzustellen, wobei sich die Gewindewelle (242) durch die Spannzangenanordnung (230) bis zu der Basis (228) erstreckt.

2. Werkzeug (200) nach Anspruch 1, ferner umfassend mindestens ein Vorspannelement (250) zum Montieren der Spannzangenanordnung (230) an der Basis (228), wobei das mindestens eine Vorspannelement (250) konfiguriert ist, um die Spannzangenanordnung (230) in Richtung der Basis (228) federzubelasten.

3. Werkzeug (200) nach Anspruch 1, wobei die Spannzangenanordnung (230) ferner umfasst:
einen Tiefenbegrenzer (244) zum Einstellen einer maximalen Schnitttiefe des Schleifaufsatzes (214A) in die Beschichtung (128) auf der Innenoberfläche (130) der Komponente (126).

4. Werkzeug (200) nach Anspruch 1, wobei die Radanordnung (270, 280, 290), die mit dem Werkzeughalter gekoppelt ist, konfiguriert ist, um den Werkzeughalter entlang eines Flansches (208), der sich um einen Innenumfang der Komponente (126) erstreckt, zu führen.

5. Werkzeug (200) nach Anspruch 4, wobei die Radanordnung (270, 280, 290) ferner umfasst:
mindestens ein erstes Rad (270), das an dem Werkzeughalter zum Ineingriffnehmen der Innenoberfläche (130) der Komponente (126) drehbar montiert ist;
mindestens ein zweites Rad (280), das an dem Werkzeughalter zum Ineingriffnehmen einer Außenkante (282) des Flansches (208) drehbar montiert ist; und
mindestens ein Paar dritter Räder (290), das an dem Werkzeughalter zum Ineingriffnehmen gegenüberliegender Seiten des Flansches (208) drehbar montiert ist.

6. Verfahren zum Entfernen einer Wärmedämmbeschichtung (TBC) (128) von einer Innenoberfläche (130) einer Verbrennungskomponente (126) eines Gasturbinensystems (100) unter Verwendung des Werkzeugs (200) nach einem der vorstehenden Ansprüche, das Verfahren umfassend:
Positionieren des Werkzeugs (200) innerhalb eines Inneren der Verbrennungskomponente (126);
unter Verwendung des ersten Handrads (236) Einstellen einer anfänglichen axialen Position des Schleifaufsatzes (214A) der Drehvorrichtung (210) innerhalb des Inneren der Verbrennungskomponente (126);
unter Verwendung des zweiten Handrads (240) Einstellen einer radialen Position des Schleifaufsatzes (214A) der Drehvorrichtung (210) innerhalb des Inneren der Verbrennungskomponente (126), um einen anfänglichen Schnitt (300) in die TBC (128) zu bilden; und
und unter Verwendung des ersten Handrads (236) und des zweiten Handrads (240) Einstellen der axialen Position und der radialen Position des Schleifaufsatzes (214A) der Drehvorrichtung (210) innerhalb des Inneren der Verbrennungskomponente (126), um zusätzliche Schnitte (304) in die TBC (128) zu bilden.

7. Verfahren nach Anspruch 6, ferner umfassend, nach dem Bilden des anfänglichen Schnitts (300) und der zusätzlichen Schnitte (304) in die TBC (128):
Anbringen eines Polieraufsatzes (214B) an der Drehvorrichtung (210); und
Entfernen zusätzlicher TBC (128) unter Verwendung des Polieraufsatzes (214B).

8. Verfahren nach Anspruch 6, ferner umfassend:
Verschieben des Werkzeugs (200) um den Innenumfang der Verbrennungskomponente (126), wenn der anfängliche Schnitt (300) und die zusätzlichen Schnitte (304) gebildet werden.

9. Verfahren nach Anspruch 6, wobei der anfängliche Schnitt (300) einen maximalen axialen Abstand von einer Kante (302) der TBC (128) definiert, wobei die zusätzlichen Schnitte (304) zwischen dem anfänglichen Schnitt (300) und der Kante (302) der TBC (128) gebildet werden.

## Revendications

1. Outil (200) destiné à enlever un revêtement d'une surface intérieure (130) d'un composant (126), comprenant :
un dispositif rotatif (210) ;
un accessoire de meulage (214A) fixé au dispositif rotatif (210) ;
un porte-outil conçu pour :
définir une position axiale de l'accessoire de meulage (214A) accouplé au dispositif rotatif (210) sur le revêtement (128) de la surface intérieure (130) du composant (126) ; et
définir une position radiale de l'accessoire de meulage (214A) accouplé au dispositif rotatif (210), la position radiale définissant une profondeur de coupe de l'accessoire de meulage (214A) dans le revêtement (128) sur la surface intérieure (130) du composant (126) ; et
un ensemble de roues (270, 280, 290) couplé au porte-outil pour guider le porte-outil autour d'un périmètre intérieur du composant (126) ;
**caractérisé en ce que**
le porte-outil comprend une base (228) et une pince de serrage (230) couplée à la base (228) pour fixer le dispositif rotatif (210) ;
dans lequel l'ensemble pince de serrage (230) comprend :
une section supérieure (232) ;
une section inférieure (234) ;
un premier volant (236) accouplé à un arbre fileté (238) destiné à déplacer sélectivement la section supérieure (232) de l'ensemble pince de serrage (230) vers ou à l'écart de la section inférieure (234) de l'ensemble pince de serrage (230) afin de faciliter la définition de la position axiale de l'accessoire de meulage (214A) ; et
un second volant (240) accouplé à un arbre fileté (242) destiné à déplacer sélectivement l'ensemble pince de serrage (230) vers ou à l'écart de la base (228) afin de faciliter la définition de la position radiale de l'accessoire de meulage (214A) de manière à définir la profondeur de coupe de l'accessoire de meulage (214A) dans le revêtement (128) sur la surface intérieure (130) du composant (126), dans lequel l'arbre fileté (242) s'étend à travers l'ensemble pince de serrage (230) vers la base (228).

2. Outil (200) selon la revendication 1, comprenant en outre au moins un élément de sollicitation (250) destiné à monter l'ensemble pince de serrage (230) à la base (228), dans lequel l'au moins un élément de sollicitation (250) est conçu pour solliciter par ressort l'ensemble pince de serrage (230) vers la base (228).

3. Outil (200) selon la revendication 1, dans lequel l'ensemble pince de serrage (230) comprend en outre :
un limiteur de profondeur (244) destiné à définir une profondeur de coupe maximale de l'accessoire de meulage (214A) dans le revêtement (128) sur la surface intérieure (130) du composant (126).

4. Outil (200) selon la revendication 1, dans lequel l'ensemble de roues (270, 280, 290) accouplé au porte-outil est conçu pour guider le porte-outil le long d'une bride (208) s'étendant autour d'un périmètre intérieur du composant (126).

5. Outil (200) selon la revendication 4, dans lequel l'ensemble de roues (270, 280, 290) comprend en outre :
au moins une première roue (270) montée rotative sur le porte-outil destinée à venir en prise avec la surface intérieure (130) du composant (126) ;
au moins une deuxième roue (280) montée de manière rotative sur le porte-outil destinée à venir en prise avec un bord extérieur (282) de la bride (208) ; et
au moins une paire de troisièmes roues (290) montées de manière rotative sur le porte-outil destinées à venir en prise avec des côtés opposés de la bride (208).

6. Procédé destiné enlever un revêtement de barrière thermique (TBC) (128) d'une surface intérieure (130) d'un composant (126) de combustion d'un système de turbine à gaz (100) à l'aide de l'outil (200) selon l'une quelconque des revendications précédentes, le procédé comprenant :
le positionnement de l'outil (200) dans un intérieur du composant (126) de combustion ;
à l'aide du premier volant (236), la définition d'une position axiale initiale de l'accessoire de meulage (214A) du dispositif rotatif (210) dans l'intérieur du composant (126) de combustion ;
à l'aide du second volant (240), la définition d'une position radiale de l'accessoire de meulage (214A) du dispositif rotatif (210) dans l'intérieur du composant (126) de combustion afin de former une coupe initiale (300) dans le TBC (128) ; et
à l'aide du premier volant (236) et du second volant (240), l'ajustement de la position axiale et de la position radiale de l'accessoire de meulage (214A) du dispositif rotatif (210) dans l'intérieur du composant (126) de combustion afin de former des coupes supplémentaires (304) dans le TBC (128).

7. Procédé selon la revendication 6, comprenant en outre, après la formation de la coupe initiale (300) et des coupes supplémentaires (304) dans le TBC (128) :
la fixation d'un accessoire de polissage (214B) au dispositif rotatif (210) ; et
l'enlèvement d'un TBC (128) supplémentaire à l'aide de l'accessoire de polissage (214B).

8. Procédé selon la revendication 6, comprenant en outre :
le déplacement de l'outil (200) autour du périmètre intérieur du composant (126) de combustion lors de la formation de la coupe initiale (300) et des coupes supplémentaires (304).

9. Procédé selon la revendication 6, dans lequel la coupe initiale (300) définit une distance axiale maximale à partir d'un bord (302) du TBC (128), dans lequel les coupes supplémentaires (304) sont formées entre la coupe initiale (300) et le bord (302) du TBC (128).
